# NEUE EUROPÄISCHE PATENTSCHRIFT

(11) **EP 1 117 723 B2**
(45) Veröffentlichungstag und Bekanntmachung des Hinweises auf die Entscheidung über den Einspruch: **30.04.2008**
(45) Hinweis auf die Patenterteilung: 05.06.2002
(21) Anmeldenummer: 99944507.5
(22) Anmeldetag: 25.08.1999
(51) Int. Cl.: C08G 65/10

(54) **VERFAHREN ZUR HERSTELLUNG VON POLYETHEROLEN DURCH RINGÖFFNENDE POLYMERISATION VON ALKYLENOXIDEN**
METHOD FOR PRODUCING POLYETHEROLS BY RING-OPENING POLYMERISATION OF ALKYLENE OXIDES
PROCEDE DE PRODUCTION DE POLYETHEROLS PAR POLYMERISATION PAR OUVERTURE DE CHAINE D'OXYDES D'ALKYLENE

(30) Priorität: 05.09.1998 DE 19840585
(43) Veröffentlichungstag der Anmeldung: 25.07.2001
(73) Patentinhaber: BASF SE, 67056 Ludwigshafen (DE)
(72) Erfinder: GROSCH, Georg, Heinrich, D-67098 Bad Dürkheim (DE); LARBIG, Harald, D-67063 Ludwigshafen (DE); LORENZ, Reinhard, D-67117 Limburgerhof (DE); JUNGE, Dieter, D-67227 Frankenthal (DE); HARRE, Kathrin, D-01109 Dresden (DE)
(86) Internationale Anmeldenummer: PCT/EP1999/006222
(87) Internationale Veröffentlichungsnummer: WO 2000/014142

(56) Entgegenhaltungen:
- EP-A- 0 283 148
- EP-A- 0 604 840
- EP-A- 0 659 798
- EP-A- 0 755 716
- WO-A-95/17248
- WO-A-97/26080
- US-A- 4 962 237
- US-A- 5 070 125
- US-A- 5 136 106
- US-A- 5 523 386
- US-A- 5 648 559
- US-A- 5 677 413
- US-A- 5 679 764
- US-A- 5 773 525
- R. Pearce, W.R. Patterson (Ed.), "Catalysis and Chemical Processes", 1981, p.20 - 25

## Beschreibung

Die Erfindung betrifft ein Verfahren zur Herstellung von Polyetheralkoholen durch ringöffnende Polymerisation von Alkylenoxiden und die Verwendung der Polyetherole.

Polyetheralkohole sind wichtige Einsatzstoffe bei der Herstellung von Polyurethanen. Ihre Herstellung erfolgt zumeist durch katalytische Anlagerung von niederen Alkylenoxiden, insbesondere Ethylenoxid und/oder Propylenoxid, an H-funktionelle Starter.

Gegenwärtig erfolgt die Herstellung der Polyetheralkohole in diskontinuierlichen Batch-Verfahren. Der Katalysator wird dabei im Starter suspendiert.

Als Katalysatoren werden zumeist lösliche basische Metallhydroxide oder Salze eingesetzt, wobei Kaliumhydroxid die größte praktische Bedeutung hat. Nachteilig bei der Verwendung von Kaliumhydroxid als Katalysator ist vor allem, daß es bei der Herstellung von hochmolekularen Polyetheralkoholen zur Bildung von ungesättigten Nebenprodukten kommt, die die Funktionalität der Polyetheralkohole herabsetzen und sich bei der Herstellung von Polyurethanen sehr nachteilig bemerkbar machen.
Zur Senkung des Gehaltes an ungesättigten Bestandteilen wird in EP A 268 922 vorschlagen, als Katalysator Cäsiumhydroxid einzusetzen. Durch die Verwendung des teuren Cäsiumhydroxids als Katalysator sinkt jedoch die Wirtschaftlichkeit des Verfahrens. Basische Metallhydroxide, die sich in den Polyetherpolyolen lösen, wie Kaliumhydroxid und Cäsiumhydroxid haben weiterhin den Nachteil, daß sie nach der Synthese mit hohen Aufwand wieder aus dem Polyetherol extrahiert werden müssen und der entstehende Abfall entsorgt werden muß.

Eine andere Stoffklasse, die sich ebenfalls als Katalysatoren für die Herstellung von Polyetherpolyolen eignen, sind schwerlösliche basische Oxide bzw. Hydroxide. Solche basischen Oxide bzw. Hydroxide können unter anderem Erdalkalioxide bzw. - hydroxide sein. So beschreibt US-A 5 679 764 die Verwendung von gröberen Magnesiumoxidpulvern als Katalysator zur Oxalkylierung. Beschrieben ist ferner die Benutzung von dotierten basischen Erdalkalimetalloxiden bzw. -hydroxiden, wie zum Beispiel Hydrotalcit. Eine ganze Reihe von Patenten beschreibt die Herstellung von engverteilten Fettalkoholethoxylaten durch Verwendung von kalziniertem oder hydrophobiertem Hydrotalcit als Katalysator. Stellvertretend für die große Anzahl dieser Patente seien folgende hier zitiert: DE-A 4 242 017, DE-A 4 137 317, DE-A 4 122 200, DE-A 4 115 149, DE-A 4 034 305, WO-A 94/11 331, WO-A 92/11 224, US-A 4 962 237.
Die Alkoxylierung von niedermolekularen Startern erfolgt gemäß den zitierten Patenten in Suspensionsfahrweise. Es werden mehr oder weniger grobe Pulver eingesetzt, die in den meisten Fällen nur unter großen technischen Mühen wieder aus dem Produkt entfernt werden können.

Erdalkalimetalloxid/-hydroxid-haltige Katalysatoren können niedermolekulare Starter gut alkoxylieren und auch hochmolekulare Starter gut ethoxylieren, jedoch ist die Geschwindigkeit bei der Propoxylierung von Startern mittlerer Molekularmasse sehr gering.

Zur Senkung des Gehaltes an ungesättigten Anteilen in den Polyetheralkoholen und zur Erhöhung der Reaktionsgeschwindigkeit bei der Anlagerung von Propylenoxid wird vorgeschlagen, als Katalysatoren Multimetallcyanidverbindungen, insbesondere Zinkhexacyanometallate, einzusetzen. Es gibt eine große Zahl von Veröffentlichungen, in denen derartige Verbindungen beschrieben wurden. So wird in DD-A-203 734 und DD-A-203 735 ein Verfahren zur Herstellung von Polyetheralkoholen unter Verwendung von Zinkhexacyanocobaltat beschrieben.

Auch die Herstellung der Zinkhexacyanometallate ist bekannt. Sie erfolgt üblicherweise, indem Lösungen von Metallsalzen, zumeist Zinkchlorid, mit Lösungen von Alkali- oder Erdalkalimetallcyanometallaten, wie Kaliumhexacyanocobaltat, umgesetzt werden. Zur entstandenen Fällungssuspension wird im Normalfall sofort nach dem Fällungsvorgang eine wassermischbare, ein oder mehrere Heteroatome enthaltende Komponente zugegeben. Diese Komponente kann bereits in einer oder in beiden Eduktlösungen vorhanden sein. Die wassermischbare, Heteroatome enthaltende Komponente kann vorzugsweise ein Ether, Polyether, Alkohol, Keton oder eine Mischung aus mindestens zwei der genannten Verbindungen sein. Derartige Verfahren sind beispielsweise beschrieben in US-A 3 278 457, US-A-3 278 458, US-A-3 278 459, US-A-3 427 256.

In DD-A-148 957 wird die Herstellung von Zinkhexacyanoiridat und dessen Verwendung als Katalysator bei der Polyetheralkoholherstellung beschrieben. Dabei wird als ein Ausgangsstoff an Stelle des entsprechenden Salzes Hexacyanoiridiumsäure eingesetzt. Die mittels Säure hergestellten Multimetallcyanidverbindungen haben zumeist eine höhere Aktivität als die mittels Hexacyanometallatsalzen hergestellten.

Während Mulitmetallcyanidkatalysatoren eine hohe Aktivitäten bei der Propoxylierung von Startermolekülen zeigen, die Molekularmassen größer 400 Dalton aufweisen, und diese bis zu hohen Molekularmassen propoxylieren können, gibt es bei der Umsetzung niedermolekularer Starter erhebliche Schwierigkeiten.

Nachteilig beim technischen Einsatz von Multimetallcyanidkatalysatoren ist vor allem, daß die Alkoxylierung von niedermolekularen Startern sehr schwierig ist. So kommt es oft zu einem verzögerten Anspringen der Reaktion und damit verbunden zu Überdosierungen des Alkylenoxids. Das kann, neben der Verringerung der Raum/Zeit-Ausbeute, auch zu ernsten Sicherheitsproblemen in den Produktionsanlagen führen.

Ein weiteres Problem beim Einsatz von Multimetallcyanidkatalysatoren ist, daß die Anlagerung von Ethylenoxid sowohl an hochmolekulare als auch an niedermolekulare Starter, zum Beispiel zur Herstellung von Polyetherolen mit Ethylenoxid-Endblöcken, wie sie unter anderem zur Herstellung von Polyurethan-Kaltweichschäumen eingesetzt werden, nicht möglich und damit der Einsatz der Multimetallcyanidkatalysatoren auf bestimmte Polyetherole beschränkt ist.

Eine einfache Kombination beider Katalysatoren in einem Verfahren, indem die Startsubstanz zunächst unter Verwendung eines basischen Katalysators mit Alkylenoxid bis zu einem Molgewicht umzusetzen, bei dem ein Doppelmetallcyanidkatalysator eingesetzt werden kann, und danach die Reaktion mittels einem Doppelmetallcyanidkatalysator weiterzuführen, scheitern unter anderem daran, daß die Abtrennung des basischen Katalysators praktisch quantitativ erfolgen muß, da er gegenüber den Multimetallcyanidkatalysatoren als Katalysatorgift wirkt. Bereits die nach der üblichen Aufarbeitung in Polyetheralkohol verbleibenden Gehalte an Alkalihydroxiden sind für diesen Zweck zu hoch. Bei Verwendung von unlöslichen, im Polyetherol suspendierten Katalysatoren ist deren Abtrennung technisch sehr schwierig durchführbar, falls diese Katalysatoren nicht entsprechend konditioniert wurden. Außerdem ist der Reinigungsschritt während der Polyetherolherstellung ein zusätzlicher Arbeitsschritt, der zu Produktverlusten, zu einer Verringerung der Raum-Zeit-Ausbeute und zu einem Anfall von Abfallstoffen führt, die entsorgt werden müssen.

Aufgabe der Erfindung war es, ein Verfahren zur Herstellung von Polyetherpolyolen zu entwickeln, das zu Polyetherolen mit einem geringen Gehalt an ungesättigten Anteilen führt, bei dem die Anlagerung von Propoxylenoxid vom Reaktionsstart bis zu hohen Molekularmassen mit hoher Reaktionsgeschwindigkeit abläuft und bei dem der Einbau von Ethylenoxid-Endblöcken durchgeführt werden kann.

Die Aufgabe konnte überraschenderweise gelöst werden durch ein Verfahren zur Herstellung von Polyetherolen durch ringöffnende Polymerisation von Alkylenoxiden an H-funktionelle Starter, dadurch gekennzeichnet, daß das Verfahren mindestens einen Verfahrensschritt a) bei dem als Katalysator eine Verbindung der allgemeinen Formel (I)

M'ₐM''_{b} (OH)_{c} O_{d} * Aₑ * L_{f} (I),

wobei
- M': ein Metallion ausgewählt aus den Gruppen IA, IIA sowie Ni oder Zn, sowie Mischungen daraus ist,
- M'': ein Metallion ausgewählt aus den Gruppen IIIA, IVA, IB bis VIIIB sowie As, Sb und Bi, sowie Mischungen daraus ist,
- A: mindestens ein einwertiges oder mehrwertiges, anorganisches oder organisches Anion ist,
- L: mindestens ein anorganischer oder organischer Ligand ist,
wobei
- a: eine rationale Zahl größer null ist,
- b, c, d, e, f: rationale Zahlen größer gleich null sind,
- c und d: nicht gleichzeitig null sein dürfen,
- a, b, c, d, e und f: so gewählt sind, daß die Elektroneutralität der Verbindung gewährleistet ist,
und die Verbindungen (I) auf feste inerte Träger aufgebracht oder in diese eingebracht oder zu Formkörpern geformt sind, und mindestens einem Verfahrensschritt b), bei dem als Katalysator eine Multimetallcyanidverbindung der allgemeinen Formel (II)

M¹ ₐ[M²(CN)_{b}(A)_{c}]_{d} · fM¹ _{g}Xₙ · h(H₂O) · eL (II)

ist, wobei
- M¹: mindestens ein Metallion, ausgewählt aus der Gruppe, enthaltend Zn2+, Fe2+, Co3+, Ni2+, Mn2+, Co2+, Sn2+, Pb2+, Mo4+, Mo6+, Al3+, V4+, V5+, Sr2+, W4+, W6+, Cr2+, Cr3+, Cd2+,
- M²: mindestens ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+
bedeuten und M¹ und M² gleich oder verschieden sind,
- A: mindestens ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- X: mindestens ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: mindestens ein mit Wasser mischbarer Ligand, ausgewählt aus der Gruppe, enthaltend Alkohole Aldehyde, Ketone, Ether, Polyether Ester, Harnstoffe, Amide, Nitrile, und Sulfide,
bedeuten, sowie
- a, b, c, d, g und n: so ausgewählt sind, daß die Elektroneutralität der Verbindung gewährleistet ist, und
- e: die Koordinationszahl des Liganden,
- e und f: gebrochene oder ganze Zahlen größer oder gleich 0
- h: eine gebrochene oder ganze Zahl größer oder gleich 0 bedeuten,
wobei die Multimetallcyanide auf feste, inerte Träger aufgebracht oder in diese einbracht sind oder zu Formkörpern geformt oder in Pulver- oder Pastenform sind, enthält, wobei zunächst in einem Verfahrensschritt a) Alkylenoxid an den Starter angelagert, danach ein Verfahrensschritt durchgeführt und an den Verfahrensschritt b) nochmals ein Verfahrensschritt a) angeschlossen wird, bei dem als Alkylenoxid Ethylenoxid eingesetzt wird.

Es wird am Reaktionsstart ein Verfahrensschritt a) durchgeführt, da die Reaktionsgeschwindigkeit bei der Alkylenoxidpolymerisation am Reaktionsstart mit den Katalysatoren der allgemeinen Formel (I) am höchsten ist. Nach Erreichen eines Molekulargewichtes von vorzugsweise mindestens 400 Dalton schließt sich ein Reaktionsschritt b) an.

Das erfindungsgemäße Verfahren zur Herstellung von Polyetherpolyolen kann sowohl in Suspensions- als auch in Festbettfahrweise betrieben werden. Falls das Verfahren in Suspensionsfahrweise betrieben wird, muß die Abtrennung des Katalysators in jedem einzelnen Schritt sehr einfach von statten gehen. Bevorzugt ist dabei, daß sich der Katalysator in jedem einzelnen Schritt durch einfache Filtrier- oder Zentrifugieroperationen vom Polyetherpolyol abtrennen läßt. Das kann beispielsweise durch eine hinreichend große Korngröße der Katalysatorpartikel oder durch geeignete Beimengungen von Filtrierhilfsmitteln erreicht werden. Besonders bevorzugt ist jedoch die Festbettfahrweise. Die eingesetzten Katalysatoren sind dazu so immobilisiert, daß sie im Reaktor verbleiben und möglicherweise nur einfache Filtrieroperationen notwendig sind, um Schwebstoffe abzutrennen.

Katalysatoren zum Einsatz in Schritt a) sind, wie ausgeführt, Verbindungen der allgemeinen Formel (I)

M'ₐM''_{b} (OH)_{c} O_{d} * Aₑ * L_{f} (I),

wobei die Symbole die oben aufgeführte Bedeutung haben.

Die Verbindungen der allgemeinen Formel (I) können bei einer Suspensionsfahrweise als Pulver oder gröbere Granulate eingesetzt werden. Bevorzugt werden die Aktivmassen für Schritt a) und b) jedoch auf feste, Träger auf-, in diese eingebracht oder zu Formkörpern geformt.

Die Träger der erfindungsgemäß verwendeten Katalysatoren der allgemeinen Formel (I) sind makroskopische Formkörper, wie sie als Katalysatorträger üblich und bekannt sind, z.B. Stränge, Splitt, Tabletten, Netze, Packungen, Gewebe, Fasern, Kugeln sowie die Innenwände von Reaktoren. Die makroskopischen Formkörper können aus anorganischen und/oder organischen Materialien bestehen. Anorganische Materialien sind beispielsweise Oxide, Carbide, Nitride oder inerte Metalle. Beispiele für Carbide sind Übergangsmetallcarbide, wie Wolframcarbid, Siliziumcarbid oder Borcarbid. Als Nitride eignen sich beispielsweise Bornitrid, Siliciumnitrid oder Aluminiumnitrid. Als inerte Metalle gelten Metalle oder Metallegierungen, die sich im Reaktionsmedium der Polyetheralkoholsynthese inert verhalten. Beispiele hierfür sind Stähle, Aluminium, Edelmetalle, Nickel, Edelstähle, Titan, Tantal, Kanthal. Als Oxide kann man unter den genannten Reaktionsbedingungen inerte Metalloxide verwenden, insbesondere solche von Metallen der Gruppen IIA bis IVA sowie IB bis VIIIb, sowie oxidische Verbindungen, die Elemente der Gruppen IA bis VIIA und/oder der Metalle der Gruppen Ib bis VIIIb enthalten.

Die Herstellung der erfindungsgemäßen Katalysatoren kann durch Aufbringen der Verbindungen vom Typ (I) auf die Oberfläche der geformten Träger oder durch Mischen von Verbindungen vom Typ (I) mit ungeformtem Trägermaterial und anschließende Formgebung erfolgen. Weiterhin ist es möglich, pulverförmige Verbindungen vom Typ (I) zu Vollkatalysatoren zu verformen. Diese Vollkatalysatoren können dann wieder zu gröberem Granulat verarbeitet werden, um gegebenenfalls in einer Suspensionsfahrweise eingesetzt zu werden.

Für die Herstellung von Verbindungen vom Typ (I) gibt es eine ganze Reihe von Verfahren und Möglichkeiten.

So können diese Verbindungen durch Kopräzipitation hergestellt werden. Dazu werden die gewünschten Metallionen in einer gemeinsamen Lösung vorgelegt und durch Zugabe von weiteren Reagenzien, zum Beispiel pH-Verschiebung durch Basenzugabe, gefällt. Die gefällten Feststoffe können zur weiteren Kristallisation auch einer hydrothermalen Behandlung unterzogen werden.
Auch eine innige Vermischung der Komponenten durch Einrotieren der gemeinsamen Lösung ist möglich.
Die so hergestellten Materialien können anschließend getrocknet und kalziniert werden.

Ferner können solche Verbindungen durch Imprägnieren oder Tränken hergestellt werden. Dazu wird ein Feststoff, der schon mindestens eine der gewünschten Komponenten enthält, mit mindestens einer Lösung, welche die anderen Metallionen enthalten kann, versetzt.

Nach Abziehen des Lösungsmittel kann ebenfalls ein Trocknungsund/oder Kalzinierungsschritt erfolgen.

Die so erhaltenen Festkörper können dann weiteren Behandlungen unterzogen werden, indem sie mit organischen oder anorganischen Liganden behandelt werden.

Bevorzugte Verbindungen von Typ (I) sind solche, bei denen M' Erdalkalimetallionen oder Zinkionen sind. Als spezielle Verbindungen sind hier zu nennen die reinen Oxide und Hydroxide, wie Magnesiumoxid, Calciumoxid, Strontiumoxid, Bariumoxid, Zinkoxid, Magnesiumhydroxid, Calciumhydroxid, Strontiumhydroxid, Bariumhydroxid oder Zinkhydroxid.
Neben den reinen Oxiden und Hydroxiden gibt es aber eine breite Palette von möglichen Dotierungen, sowohl auf Kationen- wie Anionenseite.
Durch Dotierung mit anderen Kationen, wie den Hauptgruppenelementen Bor, Aluminium, Gallium, Indium, Thallium, Silicium, Germanium, Zinn, Blei, Arsen, Antimon und Bismut, sowie den Nebengruppenelementen der Gruppen IB bis VIIIB, insbesondere Chrom, Eisen, Lanthan, Mangan, Scandium, Yttrium, Titan, Vanadium, lassen sich eine Vielzahl von Verbindungen herstellen. Als Anionen können sowohl anorganische Anionen verwendet werden, wie Halogenide, Schwefel-, Phosphor-, Stickstoff- oder Kohlenstoffhaltige Anionen, als auch organische Anionen wie Alkoxide, Carboxylate, Amide, Sulfide und vieles mehr.

Durch Dotierung der reinen Oxide oder Hydroxide ergibt sich eine Vielzahl an Verbindungen. Es seien hier einige Beispiele angeführt:

| | |
|---|---|
| Hydrotalkit | [Mg₆Al₂(OH)₁₆]CO₃ • 4 H₂O |
| Takovit | [Ni₆Al₂(OH)₁₆]CO₃ • 4 H₂O |
| Stichtit | [Mg₆Cr₂(OH)₁₆]CO₃ • 4 H₂O |
| Hydrocalumit | [Ca₂Al(OH)₆]OH • 6 H₂O |
| Magaldrat | [Mg₁₀Al₅(OH)₃₁](SO₄)₂ • m H₂O |
| Pyroaurit | [Mg₆Al₂(OH)₁₆]CO₃ • 4,5 H₂O |
| Ettringit | [Ca₆Al₂(OH)₁₂](SO₄)₃ • 26 H₂O |

Die wie oben beschrieben hergestellten Feststoffe können kristallin oder amorph sein. Kristalline Verbindungen können Schichtverbindungen sein, wie der Hydrotalkit.

Für die Formgebung der Verbindungen der allgemeinen Formel (I) gibt es eine Reihe von Verfahren, die angewandt werden können.

Ein Verfahren, die Verbindungen der allgemeinen Formel (I) auf einen inerten Formkörper zu bringen, besteht im Aufsprühen einer Suspension dieser Verbindungen in einer inerten Flüssigkeit. Als Sprühsuspension kann man entweder die Fällmaische der Verbindungen verwenden oder man suspendiert die bereits synthetisierte und möglicherweise getrocknete Verbindung in einer geeigneten Süspensionsflüssigkeit.
Um die Haftung der aufgesprühten Verbindung vom Typ I auf dem Formkörper zu erhöhen, kann man der Sprühsuspension zusätzlich anorganische Stoffe zusetzen, die eine Binderwirkung entfalten.

Die so hergestellten Formkörper können dann einem Kalzinierungsschritt unterzogen werden. Dies kann sich sowohl auf Haftung auf dem Formkörper positiv auswirken, als auch der Ausbildung der aktiven Phase förderlich sein.

Ferner kann man zur Steigerung der Haftung der aufgesprühten Verbindungen der allgemeinen Formel (I) reaktive, anorganische oder organische Stoffe entweder in Reinform, in Form von Lösungen, Dispersionen oder Emulsionen, einsetzen, die entweder thermisch oder photochemisch reagieren können, d.h. vernetzt werden und so einen starken Halt der Aktivmasse auf dem Träger ermöglichen.
Bevorzugt werden dabei reaktive organische Polymere, deren Vernetzungsprodukte poröse Strukturen bilden oder reaktive anorganische Stoffe, wie Metallsäureester.

Diese oben beschriebenen Verfahren zur Aufbringung der Verbindungen der allgemeinen Formel (I) auf das Trägermaterial sind auch anwendbar, wenn man die Verbindungen der allgemeinen Formel (I) auf die Innenwände von Reaktoren aufbringen will.

Neben dem Aufsprühen einer Verbindungen der allgemeinen Formel (I) enthaltenden Suspension kann man analog einem High-solidscoating-Verfahren - wie in DE 444,23,46 beschrieben - direkt das Pulver dieser Verbindungen auf den Formkörper aufbringen. In der Regel werden bei diesem Verfahren parallel zum Zulauf des Pulvers die Formkörper mit einer haftvermittelnden Flüssigkeit besprüht. Wie auch beim Aufsprühen kann man der haftvermittelnden Flüssigkeit Stoffe zusetzen, die durch ihre Binderwirkung eine erhöhte Haftung der Aktivkomponenten auf dem Formkörper gewährleisten.

Auch hier können reaktive, d.h. vernetzende anorganische oder organische Komponenten zugesetzt werden.

Ein weiteres Verfahren, die Verbindungen der allgemeinen Formel (I) auf den Formkörper zu bringen, besteht in der direkten Synthese der Verbindung oder deren Vorläufer auf dem Formkörper. Dazu werden die verschiedenen Lösungen, welche die Edukte enthalten, entweder zeitgleich oder in kurzem zeitlichen Versatz mit dem Formkörper in Kontakt gebracht. Das in-Kontakt-bringen des Formkörpers mit den Lösungen kann durch Besprühen, Tauchen, Tränken, Imprägnieren oder ähnlichen Prozeduren geschehen. Durch das Mischen der Flüssigkeiten auf dem Formkörper kann es zur Fällung der Aktivkomponente oder dessen Vorläufers auf dem Formkörpers kommen.
Ebenso ist es möglich, durch sukzessives Tränken bzw.
Imprägnieren die gewünschten Metallionen aufzubringen.
Die so erhaltenen Formkörper können, falls notwendig, noch einer hydrothermalen Kristallisation unterworfen werden.
Ferner können die so erhaltenen Formkörper einem Temperaturschritt ausgesetzt werden, falls dieser notwendig sein sollte, um die katalytisch aktiven Verbindungen gemäß Formel (I) erst noch zu erzeugen.
Auch hier können haftungsfördernde Stoffe vor oder nach dem Temperaturschritt zugesetzt werden.

In den bisher beschriebenen Herstellverfahren für die erfindungsgemäßen Katalysatoren werden die Verbindungen der allgemeinen Formel (I) auf inerte Formkörper aufgebracht. Man kann aber auch verformte Verbindungen der allgemeinen Formel (I) herstellen, indem man aus den Pulvern Vollkontakte herstellt. Dies ist durch Tablettieren, Verstrangen oder Extrudieren möglich. Je nach der Höhe der Herstellkosten für die Verbindungen gemäß Formel (I) wird man sich entweder für die Trägerung auf inerten Formkörpern oder die Verformung zu Vollkontakten entscheiden. Beim Tablettieren der oxidischen- Verbindungen gemäß Formel (I) muß man in der Regel zusätzlich Gleitmittel zusetzen. Dies können Graphit, Bornitrid oder organische Moleküle, wie Stearate oder Alginate sein. An die Tablettierung kann sich ein Temperaturschritt anschließen, um die organischen Tablettierungshilfsmittel wieder herauszubrennen.

Beim Verstrangen oder Extrudieren können in einem Kneter, Koller oder ähnlichem Gerät die Aktivmassenpulver zuerst mit einer Anteigungsflüssigkeit zu einer plastischen Masse verarbeitet werden. Bei diesem Knetschritt können der entstehenden Masse weitere Ingredientien zugesetzt werden, die entweder die Eigenschaften der plastischen Masse beim eigentlichen Verformungsschritt verbessern oder die dem aus dieser Masse erzeugten Formkörper einen besseren Zusammenhalt gegeben. Für den Fachmann gibt es hier eine große Zahl von Möglichkeiten, unterschiedliche Zusätze zu benutzen. Die Gehalte der Zusätze sind nicht kritisch, sie sollten so hoch liegen, daß sie ihre Wirkung voll entfalten, aber nicht so hoch, daß die katalytische Wirkung der Verbindungen gemäß Formel (I) reduziert wird.

Die so erhaltenen Formkörper können anschließend zu Splitt verarbeitet werden, der dann auch in Suspensionsfahrweise eingesetzt werden kann. Der eingesetzte Splitt hat dann Teilchengrößen von 100 µm bis 2 mm, bevorzugt 250 µm bis 1 mm.

Eine weitere Möglichkeit der Herstellung der Katalysatoren besteht darin, Verbindungen der allgemeinen Formel (I) in einer festen Matrix einzuschließen. Die feste Matrix kann anorganischer oder organischer Natur sein.

Zum Einschluß einer der Verbindungen der allgemeinen Formel (I) in eine anorganische Matrix kann man die entsprechende Verbindungen der allgemeinen Formel (I) in Metallsäureester, bzw. Alkoxymetallaten suspendieren. Durch Zugabe von Base oder Säure lassen sich die Metallsäureester zu festen Stoffen polymerisieren. Bevorzugt sind dabei die Ester der Silizium-, Aluminium-, Titan- und/oder Zirkonsäure.

Als organische Komponenten lassen sich alle Stoffe bzw. Stoffgemische verwenden, in denen die Verbindungen gemäß Formel (I) suspendiert werden können und welche auf irgendeine Art und Weise zu Feststoffen polymerisiert werden können.

Die Polymerisation sollte so durchgeführt werden, daß die entstehenden Feststoffpartikel in einer Festbettanordnung verwendet werden können. Ferner sollten die erhaltenen Feststoffpartikel eine hinreichende Porosität besitzen, um den An- und Abtransport der Edukte bzw. Produkte zur Aktivmasse zu ermöglichen. Zur Verbesserung der Porosität ist es möglich, bei der Polymerisation Hilfsstoffe zuzusetzen, die durch physikalische oder chemische Behandlungen nach der Polymerisation wieder entfernt werden.
Die Polymerisation kann ferner so erfolgen, daß ein offenporiger Schaum entsteht, in welchem die Aktivmasse fixiert ist.

Die Katalysatoren für Schritt b) sind insbesondere Multimetallcyanidkatalysatoren der allgemeinen Formel

M¹ ₐ[M²(CN)_{b}(A)c]_{d} . fM¹ _{g}Xn . h(H₂O) . eL,

wobei
- M¹: mindestens ein Metallion, ausgewählt aus der Gruppe, enthaltend Zn2+, Fe2+, Co3+, Ni2+, Mn2+, Co2+, Sn2+, Pb2+, Fe3+, Mo4+, Mo6+, Al3+, V4+, V5+, Sr2+, W4+, W6+, Cr2+, Cr3+, Cd2+ vorzugsweise enthaltend Zn2+, Fe2+, Ni2+, Mn2+, Co2+ und Cr2+, besonders bevorzugt Zn2+,
- M²: mindestens ein Metallion ausgewählt aus der Gruppe, enthaltend Fe2+, Fe3+, Co3+, Cr3+, Mn2+, Mn3+, Rh3+, Ru2+, Ru3+, V4+, V5+, Co2+, Ir3+ und Cr2+, vorzugsweise enthaltend Co3+, Fe3+, Fe2+, Rh3+, Ir3+, besonders bevorzugt Co3+, Rh3+, Ir3+ und Fe3+, gleich oder verschieden M¹,
- A: mindestens ein Anion, ausgewählt aus der Gruppe, enthaltend Halogenid, Hydroxid, Sulfat, Carbonat, Cyanid, Thiocyanat, Isocyanat, Cyanat, Carboxylat, Oxalat oder Nitrat,
- X: mindestens ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: mindestens ein wassermischbarer organischer Ligand, ausgewählt aus der Gruppe, enthaltend Alkohole, Aldehyde, Ketone, Ether, Polyether, Ester, Harnstoffe, Amide, Nitrile oder Sulfide,
- a, b, c, d, g und n: so gewählt sind, daß die Elektroneutralität der Verbindung gewährleistet ist,
- e: die Koordinationszahl des Liganden bedeutet,
- e und f: gebrochene oder ganze Zahlen größer oder gleich Null,
- h: eine gebrochene oder ganze Zahl größer oder gleich Null bedeuten.

Diese können für die Suspensionsfahrweise wiederum in Pulverform, Pastenform oder in Form eines gröberen Granulats eingesetzt werden. Für die Festbettfahrweise können die Doppelmetallcyanide erfindungsgemäß auf feste Träger auf-, in diese eingebracht oder zu Formkörpern geformt sind.

Die hierfür geeigneten Verfahren wurden oben bereits ausführlich gewürdigt.

Die Herstellung des Doppelmetallcyanidkomplexes kann nach üblichen Verfahren erfolgen. Derartige Verfahren sind beispielsweise beschrieben in US 5,741,428, US 5,693,584, US 5,637,673, US 5,627,122, US 5,627,120, US 5,589,431, US 5,536,883, US 5,482,908, US 5,470,813.

Die Herstellung der Polyether gliedert sich üblicherweise in folgende Verfahrensschritte:

In Verfahrensschritt a) erfolgt die Anlagerung von niederen Alkylenoxiden, insbesondere Ethylenoxid und/oder Propylenoxid an H-funktionelle Startsubstanzen. Als H-funktionelle Startsubstanzen kommen für das erfindungsgemäße Verfahren vorzugsweise Alkohole zum Einsatz, insbesondere solche mit 1 bis 8, vorzugsweise jedoch 2 oder 3 Hydroxylgruppen und 2 bis 6 Kohlenstoffatomen im Molekül, zum Einsatz. Beispiele hierfür sind Glykole, insbesondere Ethylenglykol, Propylenglykol, sowie Glyzerin, Trimethylolpropan oder Pentaerythrit. Es können auch Gemische von Alkoholen untereinander oder mit Wasser eingesetzt werden. Die Anlagerung der Alkylenoxide an die Startsubstanzen erfolgt bei den hierfür üblichen Bedingungen, das heißt bei Temperaturen im Bereich von 80 bis 150°C und Drücke im Bereich von 0,1 bis 8 bar.

Vor der Dosierung der Alkylenoxide sollte die Reaktionsmischung durch Strippen mit einem Inertgas, vorzugsweise Stickstoff, inertisiert werden. Der Katalysator der allgemeinen Formel (I) kann hierbei als Schüttung, als Fest- oder als Fließbett vorliegen oder im Starter zuspendiert sein.

Der Reaktionsstart ist durch Druckabnahme im Reaktor erkennbar.

Nach der Abreaktion des Alkylenoxids und gegebenenfalls einer Nachreaktion wird das erhaltene Alkylenoxidumsetzungsprodukt vom Katalysator abgetrennt und aufgearbeitet. Zur Beseitigung von feinkörnigen Katalysatorbestandteilen und von Abrieb kann eine Filtration des Alkylenoxidumsetzungsproduktes erfolgen. Zur Abtrennung von leichtflüchtigen Bestandteilen erfolgt wie üblich eine Destillation, vorzugsweise unter Vakuum.

Das Produkt von Verfahrensschritt a) hat vorzugsweise ein Molekulargewicht von 100 bis 1000 g/mol.

Zur Durchführung von Verfahrensschritt b) wird das Endprodukt von Verfahrensschritt a) mit einem Multimetallkatalysator der allgemeinen Formel (II) versetzt und mit einem Alkylenoxid, insbesondere Propylenoxid, zur Umsetzung gebracht. Der Multimetallkatalysator kann ebenfalls auf inerte Träger aufgebracht oder in diese eingebracht oder zu Formkörpern geformt sein, er kann jedoch auch in der Reaktionsmischung suspendiert vorliegen. Die Umsetzung verläuft bei den gleichen Reaktionsbedingungen wie in Verfahrensschritt a). Das Endprodukt von Verfahrensschritt b) hat eine Molmasse von 100 bis 100000, insbesondere 1000 bis 50000.

Im Anschluß an den Verfahrensschritt b) wird nochmals ein Verfahrensschritt a) angeschlossen wobei als Alkylenoxid Ethylenoxid eingesetzt wird.

Die nach dem erfindungsgemäßen Verfahren hergestellten Polyetherole zeichnen sich durch einen geringen Gehalt an ungesättigten Verbindungen, auch bei hohen Molmassen, aus. Die Reaktion verläuft in sehr hoher Raum-Zeit-Ausbeute.

Die nach den erfindungsgemäßen Verfahren hergestellten Polyetherole werden insbesondere zur Herstellung von Polyurethanen eingesetzt.

Die Erfindung soll an nachstehenden Beispielen näher erläutert werden.

### Herstellung von Katalysatoren für Verfahrensschritt a)

### Beispiel 1

600 g Hydrotalcit (C300, Fa. Giulini) wurden mit 400 g Böhmit (Pural® SB, Fa. Condea) und 610 ml einer wäßrigen Ameisensäurelösung (2 Gew.-% Ameisensäure) eine Stunde lang im Kneter verdichtet und zu Rundsträngen mit 2 mm-Durchmesser verformt. Die Stränge wurden bei 120°C getrocknet und bei 500°C 5 h lang kalziniert. Ein Teil der erhaltenen Stränge wurde für Beispiel 6 zu bis 1,6 mm Splitt verarbeitet.

### Beispiel 2

In einem Becherglas wurde eine Lösung von 175 g Natriumcarbonat und 398 g Natriumhydroxid in 2 l Wasser vorgelegt und auf 40°C erwärmt. Unter ständigem Rühren gab man innerhalb von 30 min eine Lösung von 109 g Lithiumnitrat und 1238 g Aluminiumnitrat in 1,5 l Wasser zu. Die entstandene Suspension wurde dann weitere 2 h bei 40°C gerührt. Danach wurde der entstandene Feststoff abgesaugt, mit Wasser gewaschen und bei 110°C 16 h lang getrocknet.

### Beispiel 3

120 g Pulver aus Beispiel 2 wurden mit 80 g Böhmit (Pural® SB, Fa. Condea) und 59 ml einer wäßrigen Ameisensäurelösung (2 Gew.-% Ameisensäure) eine Stunde lang im Kneter verdichtet und zu Rundsträngen mit 2 mm-Durchmesser verformt. Die Stränge wurden bei 120°C getrocknet und bei 500°C 5 h lang kalziniert.

### Beispiel 4

200g Pulver aus Beispiel 2 wurden mit 52 ml einer wäßrigen. Ameisensäurelösung (2 Gew.-% Ameisensäure) eine Stunde lang im Kneter verdichtet und zu Rundsträngen mit 2mm-Durchmesser verformt. Die Stränge wurden bei 120°C getrocknet.

### Beispiel 5

50 g Magnesiumhydroxidcarbonat (4 MgCO₃ • Mg(OH)₂) wurden mit 33,3 g Böhmit (Pural SB, Fa. Condea) und 78 ml einer wäßrigen Ameisensäurelösung (2 Gew.-% Ameisensäure) eine Stunde lang im Kneter verdichtet und zu Rundsträngen mit 2mm-Durchmesser verformt. Die Stränge wurden bei 120°C getrocknet und bei 500°C 5 h lang kalziniert.

### Beispiel 6

Die Synthese wurde in einem gereinigten und getrockneten 5-1-Rührreaktor ausgeführt. Bei Raumtemperatur wurden 779,5 g Glycerin und 35,3 g gesplitteter Katalysator nach Beispiel 1 in den Reaktor gegeben. Dann wurde durch dreimaliges Evakuieren und Füllen des Reaktors mit Stickstoff der Kesselinhalt inertisiert. Bei 95°C wurde 5 Stunden Vakuum kleiner 1 mbar abs. angelegt. Anschließend wurden bei 125°C portionsweise insgesamt 1648 g Propylenoxid so zugegeben, daß ein Reaktorinnendruck von 7,2 bar abs. nicht überschritten wurde. Nach Zulauf- und Abreaktionsende wurde (bei 125°C) 30 min ein Wasserstrahlvakuum angelegt. Zur Abtrennung des Katalysators wurde über eine doppelte Schicht eines Seitz-Tiefenfilters filtriert. Analysen: OH-Zahl = 588 mg KOH/g, Viskosität = 788 mPa*s (bei 25°C), ungesättigte Bestandteile = 0,0226 meq/g, GPC: Mₙ = 198,3 g/mol, M_{w} = 208,9 g/mol, D = 1,053.

### Beispiel 7

Die Synthese wurde in einem gereinigten und getrockneten 5-1-Rührreaktor ausgeführt. Bei 50°C wurden 303,2 g des Produkts aus 6 eingefüllt. Durch dreimaliges Evakuieren und anschließendes Füllen mit Stickstoff wurde der Reaktorinhalt inertisiert. Die Entgasung erfolgte durch 1,5 stündiges Evakuieren bei 105°C kleiner 1 mbar abs. Dann wurden 1,589 g eines Multimetallkatalysators aus der Umsetzung von Zinkacetat mit Hexacyanokobaltsäure zugegeben. Wiederum wurde dreifach evakuiert und mit Stickstoff befüllt. Daran schloß sich eine 25 minütige Evakuierung bei 125°C kleiner 1 mbar abs. an. Bei der selben Temperatur wurde ein Stickstoffvordruck von 3,5 bar angelegt und 195 g Propylenoxid sowie 29 g Ethylenoxid zugegeben. Das Anspringen der Reaktion wurde am Druckabfall erkannt. Anschließend wurde ein Gemisch aus 3996 g Propylenoxid und 570,5 g Ethylenoxid innerhalb von 3,3 h zudosiert. Nach weiteren 30 min bei 125°C wurde das Rohpolyol im Vakuum von leichtflüchtigen Bestandteilen befreit. Zur Abtrennung des Katalysators wurde über eine doppelte Schicht eines Seitz-Tiefenfilters filtriert. Analysen: OH-Zahl = 35,8 mg KOH/g, Viskosität = 1024 mPa*s (bei 25°C), ungesättigte Bestandteile = 0,0028 meq/g, GPC: Mₙ = 3525 g/mol, M_{w} = 3673 g/mol, D = 1,042.

## Patentansprüche

1. Verfahren zur Herstellung von Polyetherolen durch ring-öffnende Polymerisation von Alkylenoxiden an H-funktionelle Starter, **dadurch gekennzeichnet, daß** das Verfahren mindestens einen Verfahrensschritt a) bei dem als Katalysator eine Verbindung der allgemeinen Formel (I)
M'ₐM''_{b} (OH)_{c} O_{d} * Aₑ * L_{f} (I),
eingesetzt wird, wobei
M' ein Metallion ausgewählt aus den Gruppen IA, IIA des Periodensystems sowie Ni oder Zn, sowie Mischungen daraus ist,
M'' ein Metallion ausgewählt aus den Gruppen IIIA, IVA, IB bis VIIIB des Periodensystems sowie As, Sb und Bi, sowie Mischungen daraus ist,
A mindestens ein einwertiges oder mehrwertiges, anorganisches oder organisches Anion ist,
L mindestens ein anorganischer oder organischer Ligand ist,
wobei
a eine rationale Zahl größer null ist,
b, c, d, e, f rationale Zahlen größer gleich null sind,
c und d nicht gleichzeitig null sein dürfen,
a, b, c, d, e und f so gewählt sind, daß die Elektroneutralität der Verbindung gewährleistet ist,
und die Verbindungen (I) auf feste inerte Träger aufgebracht oder in diese eingebracht oder zu Formkörpern geformt sind, und mindestens einen Verfahrensschritt b), bei dem der Katalysator eine Multimetallcyanidverbindung der allgemeinen Formel (II)
M¹ₐ[M²(CN)_{b}(A)_{c}]_{d} · fM¹_{g}Xₙ · h(H₂O) · eL (II)
ist, wobei
M¹ mindestens ein Metallion, ausgewählt aus der Gruppe, enthaltend Zn2+, Fe2+, Co3+, Ni2+, Mn2+, Co2+, Sn2+, Pb2+, Mo4+, Mo6+, A13+, V4+, V5+, Sr2+, W4+, W6+, Cr2+, Cr3+, Cd2+,
M² mindestens ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+
bedeuten und M¹ und M² gleich oder verschieden sind,
A mindestens ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
X mindestens ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
L mindestens ein mit Wasser mischbarer Ligand, ausgewählt aus der Gruppe, enthaltend Alkohole Aldehyde, Ketone, Ether, Polyether, Ester, Harnstoffe, Amide, Nitrile, und Sulfide,
bedeuten, sowie
a, b, c, d, g und n so ausgewählt sind, daß die Elektroneutralität der Verbindung gewährleistet ist, und
e die Koordinationszahl des Liganden,
e und f gebrochene oder ganze Zahlen größer oder gleich 0
h eine gebrochene oder ganze Zahl größer oder gleich 0 bedeuten,
wobei die Multimetallcyanide auf feste, inerte Träger aufgebracht oder in diese einbracht sind oder zu Formkörpern geformt oder in Pulver- oder Pastenform sind, enthält, wobei zunächst in einem Verfahrensschritt a) Alkylenoxid an den Starter angelagert, danach ein Verfahrensschritt b) durchgeführt an den Verfahrensschritt b) nochmals ein Verfahrensschritt a) angeschlossen wird, bei dem als Alkylenoxid Ethylenoxid eingesetzt wird.

2. Verfahren nach Anspruch 1, **dadurch gekennzeichnet, daß** als Alkylenoxid bei Verfahrensschritt a) Ethylenoxid und/oder Propylenoxid und als Alkylenoxid bei Verfahrensschritt b) Propylenoxid eingesetzt wird.

## Claims

1. A process for preparing polyetherols by ring-opening polymerization of alkylene oxides onto H-functional initiator molecules, which comprises at least one process step a) in which a compound of the formula (I)
M'ₐM''_{b} (OH)_{c} O_{d} * Aₑ * L_{f} (I),
is used as catalyst, where
M' is a metal ion selected from groups IA, IIA of the Periodic Table and Ni or Zn, and mixtures thereof,
M'' is a metal ion selected from groups IIIA, IVA, IB to VIIIB of the Periodic Table and As, Sb and Bi, and mixtures thereof,
A is at least one singly charged or multiply charged, inorganic or organic anion,
L is at least one inorganic or organic ligand,
where
a is a rational number greater than zero,
b, c, d, e, f are rational numbers greater than or equal to zero,
c and d must not simultaneously be zero,
a, b, c, d, e and f are selected such that the compound is electrically neutral,
and the compounds (I) are applied to solid inert supports or incorporated in the latter or molded to form shaped bodies,
and at least one process step b) in which the catalyst is a multimetal cyanide compound of the formula (II)
M¹ₐ[M²(CN)_{b}(A)_{c}]_{d} · fM¹_{g}Xₙ · h(H₂O) · eL (II)
where
M¹ is at least one metal ion selected from the group comprising Zn2+, Fe2+, Co3+, Ni2+, Mn2+, Co2+, Sn2+, Pb2+, Mo4+, Mo6+, A13+, V4+, V5+, Sr2+, W4+, W6+, Cr2+, Cr3+, Cd2+,
M² is at least one metal ion selected from the group comprising Fe2+, Fe3+, Co2+, Co3+, Mn2+, Mn3+, V4+, V5+, Cr2+, Cr3+, Rh3+, Ru2+, Ir3+
and M¹ and M² are identical or different,
A is at least one anion selected from the group comprising halide, hydroxide, sulfate, carbonate, cyanide, thio-cyanate, isocyanate, cyanate, carboxylate, oxalate and nitrate,
X is at least one anion selected from the group comprising halide, hydroxide, sulfate, carbonate, cyanide, thio-cyanate, isocyanate, cyanate, carboxylate, oxalate and nitrate,
L is at least one water-miscible ligand selected from the group comprising alcohols, aldehydes, ketones, ethers, polyethers, esters, ureas, amides, nitriles and sulfides,
and
a, b, c, d, g and n are selected such that the compound is electrically neutral, and
e is the coordination number of the ligand,
e and f are fractional numbers or integers greater than or equal to 0
h is a fractional number or integer greater than or equal to 0,
the multimetal cyanides being applied to solid, inert supports or incorporated in the latter or molded to form shaped bodies or in powder or paste form, wherein alkylene oxide is first added onto the initiator molecule in a process step a), a process step b) is then carried out and another process step a) is carried out after the process step b), in which the alkylene oxide used is ethylene oxide.

2. The process according to claim 1, wherein the alkylene oxide used in process step a) is ethylene oxide and/or propylene oxide and the alkylene oxide used in process step b) is propylene oxide.

## Revendications

1. Procédé de fabrication de polyéthérols par polymérisation à ouverture de cycle d'oxydes d'alkylène sur des initiateurs à atomes H fonctionnels, **caractérisé en ce que** le procédé contient au moins une étape de procédé a) dans laquelle on utilise, comme catalyseur, un composé de formule générale (I) :
M'ₐM''_{b} (OH)_{c} O_{d} * Aₑ * L_{f} (I),
dans laquelle :
M' représente un ion métallique choisi parmi les groupes IA, IIA du système périodique, et parmi les éléments Ni ou Zn, ainsi que des mélanges de ceux-ci,
M" représente un ion métallique choisi parmi les groupes IIIA, IVA, IB à VIIIB du système périodique, ainsi que parmi les éléments As, Sb et Bi, et des mélanges de ceux-ci,
A représente au moins un anion monovalent ou polyvalent, inorganique ou organique,
L représente au moins un ligand inorganique ou organique,
dans laquelle :
a représente un nombre rationnel supérieur à zéro,
b, c, d, e, f représentent des nombres rationnels supérieurs ou égaux à zéro,
c et d ne doivent pas être simultanément égaux à zéro,
a, b, c, d, e et f sont choisis de manière à garantir la neutralité électrique du composé,
et les composés (I) sont appliqués sur des supports solides inertes ou incorporés à ceux-ci, ou sont élaborés sous la forme de corps moulés,
et au moins une étape de procédé b), dans laquelle le catalyseur est un composé de cyanure multimétallique de formule générale (II) :
M¹ₐ[M²(CN)_{b}(A)_{c}]_{d} · fM¹_{g}Xₙ · hH₂O) · eL (II)
dans laquelle :
M¹ représente au moins un ion métallique, choisi dans le groupe comprenant les ions Zn²⁺, Fe²⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺, Cd²⁺,
M² représente au moins un ion métallique choisi dans le groupe comprenant les ions Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺
et M¹ et M² sont identiques ou différents,
A représente au moins un anion choisi dans le groupe comprenant des composés du type halogénure, hydroxyde, sulfate, carbonate, cyanure, thiocyanate, isocyanate, cyanate, carboxylate, oxalate ou nitrate,
X représente au moins un anion choisi dans le groupe comprenant des composés du type halogénure, hydroxyde, sulfate, carbonate, cyanure, thiocyanate, isocyanate, cyanate, carboxylate, oxalate ou nitrate,
L représente au moins un ligand miscible à l'eau, choisi dans le groupe comprenant des alcools, des aldéhydes, des cétones, des éthers, des polyéthers, des esters, des urées, des amides, des nitriles et des sulfures,
ainsi que
a, b, c, d, g et n sont choisis de manière à garantir la neutralité électrique du composé, et
e représente l'indice de coordination du ligand,
e et f représentent des nombres décimaux ou entiers supérieurs ou égaux à 0,
h représente un nombre décimal ou entier supérieur ou égal à 0,
les cyanures multimétalliques étant appliqués sur des supports solides inertes ou incorporés à ceux-ci, ou élaborés sous la forme de corps moulés, ou se présentant sous la forme de poudre ou de pâte, dans lequel on procède d'abord, dans une étape de procédé a), à la fixation de l'oxyde d'alkylène à l'initiateur, puis on réalise une étape de procédé b), que l'on fait suivre à nouveau d'une étape de procédé a), dans lequel on utilise l'oxyde d'éthylène comme oxyde d'alkylène.

2. Procédé selon la revendication 1, **caractérisé en ce que** l'on utilise l'oxyde d'éthylène et/ou l'oxyde de propylène comme oxyde d'alkylène à l'étape de procédé a) et l'oxyde de propylène comme oxyde d'alkylène à l'étape de procédé b).
